# FASCICULE DE BREVET EUROPEEN

(11) **EP 2 027 196 B1**
(45) Date de publication et mention de la délivrance du brevet: **03.10.2012**
(21) Numéro de dépôt: 07766017.3
(22) Date de dépôt: 09.05.2007
(51) Int. Cl.: C08J 9/10

(54) **PROCEDE DE FABRICATION DE MOUSSES THERMOPLASTIQUES**
VERFAHREN ZUR HERSTELLUNG THERMOPLASTISCHER SCHAUMSTOFFE
METHOD FOR PRODUCTION OF THERMOPLASTIC FOAMS

(30) Priorité: 09.06.2006 FR 0605116
(43) Date de publication de la demande: 25.02.2009
(73) Titulaire: ARKEMA FRANCE, 92700 Colombes (FR)
(72) Inventeur: HIDALGO, Manuel, F-69530 Brignais (FR); SAGE, Jean-Marc, F-69600 Oullins (FR); LACROIX, Eric, F-69480 Amberieux d'Azergues (FR); RADIGUE, Arnaud, F-95240 Cormeilles en Parisis (FR)
(74) Mandataire: Albani, Dalila
(86) Numéro de dépôt international: PCT/FR2007/051237
(87) Numéro de publication internationale: WO 2007/141436

(56) Documents cités:
- EP-A- 1 580 220
- GB-A- 1 046 374
- US-A1- 2005 213 910

## Description

La présente invention concerne un procédé de fabrication de mousses de polymères thermoplastiques, tel que le polyéthylène, le polypropylène, le polystyrène, le polychlorure de vinyle.

L'utilisation de composés azoïques comme agents d'expansion pour la fabrication de mousses de polymères est connue. Ainsi, l'azodicarbonamide est l'agent d'expansion usuel lorsque la température de fabrication des mousses est relativement élevée, typiquement supérieure à 150°C et le 2-2'azobisisobutyronitrile (AZDN) est le plus souvent utilisé lorsque la température de fabrication des mousses est plus basse.

L'AZDN est un solide blanc pouvant libérer des quantités significatives d'azote gazeux en un temps très court, dès lors que sa température de mise en oeuvre est voisine de 100°C. Il convient tout particulièrement à la fabrication de mousses rigides de polymères, par exemple les mousses rigides de polymères thermoplastiques.

Ces mousses de polymères, éventuellement réticulées, possèdent un excellent compromis entre la légèreté d'un matériau expansé et les propriétés mécaniques d'un matériau rigide à la température voisine de l'ambiante. Elles peuvent être fabriquées à partir de différents polymères thermoplastiques, notamment le polyéthylène, le polypropylène, le polystyrène et le polychlorure de vinyle (PVC).

Lorsque l'AZDN, connu par ailleurs comme initiateur de polymérisation, est utilisé comme agent d'expansion pour la fabrication de mousses thermoplastiques, la quantité de produit mise en jeu par rapport à la mousse polymère finale peut être considérable (typiquement quelques pourcents en poids) et supérieure à celle mise en oeuvre dans les applications d'amorçage de polymérisation (souvent moins de 1 % en poids par rapport au produit final). Ainsi, l'incorporation de l'AZDN en poudre en mélange avec au moins un polymère thermoplastique sous la forme de solide divisé, comme le PVC, également souvent utilisé sous forme de poudre, présente la difficulté d'homogénéité du mélange des poudres résultant, ce qui a un effet direct sur la qualité de la mousse finale, laquelle peut présenter différents types de défauts comme, par exemple, des défauts de surface, une taille ou une distribution de taille de cellules inadéquate.

Un des moyens pour résoudre ce problème consiste à utiliser l'AZDN ayant une distribution granulométrique particulièrement soignée. Or, très souvent cette distribution granulométrique est très difficile à obtenir car elle fait appel à des étapes de tamisage et classification qui sont problématiques du point de vue de la manipulation et de la sécurité du fait de la génération de poussières.

Un autre inconvénient de l'AZDN est la formation de sous-produits toxiques comme le tetra-méthyl-succinonitrile. Ces produits générés lors de la décomposition de l'AZDN sont susceptibles de se retrouver, dans des concentrations non négligeables, dans les mousses finales.

La présente invention fournit un procédé de fabrication de mousses thermoplastiques qui permet de résoudre en partie ou en totalité les inconvénients précités.

Le procédé, selon la présente invention, est caractérisé en ce qu'il comprend une étape de pré-mélange d'au moins un polymère thermoplastique se présentant sous la forme d'un solide divisé (par exemple poudre, granulés, écailles, agglomérats) avec au moins un ester d'acide azocarboxylique de formule (I) 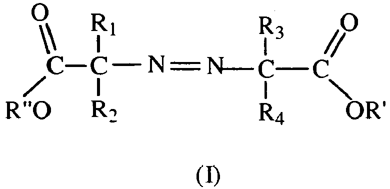 dans laquelle R₁, R₂, R₃ et R₄ identiques ou différents sont sélectionnés indépendamment dans le groupe consistant en
- alkyles linéaires ou ramifiés ayant de 1 à 9 atomes de carbone, de préférence de 1 à 4 atomes de carbone, éventuellement substitués par un ou plusieurs substituants sélectionnés parmi les substituants hydroxyl, alkoxy en C₁ à C₆ halogène ;
- cycloalkyles en C₃ à C₁₂, éventuellement substitués par un ou plusieurs substituants sélectionnés parmi les groupes alkyle en C₁ à C₆, alkoxy en C₁ à C₆ hydroxy et halogéné ;
- aralkyles éventuellement substitués par un ou plusieurs groupes alkyle en C₁ à C₆, alkoxy en C₁ à C₆ hydroxy et halogéné ;
- aryles éventuellement substitués par un ou plusieurs substituants sélectionnés parmi les groupes alkyle en C₁ à C₆, alkoxy en C₁ à C₆ hydroxy et halogéné ;
avec au moins une des combinaisons R₁-R₂ et R₃-R₄ pouvant éventuellement former un cycle aliphatique ; R" et R' sont identiques ou différents l'un de l'autre et sont sélectionnés indépendamment dans le groupe consistant en radicaux aliphatiques linéaires ou ramifiés en C₁ à C₁₀, de préférence en C₁ à C₄.

En outre ces esters d'acides azocarboxyliques ont une basse température de fusion et l'étape de prédissolution dans un solvant avant l'étape de pré-mélange n'est pas nécessaire. Les esters d'acides azocarboxyliques préférés sont ceux dans lesquels R" et R' représentent le méthyle ou l'éthyle et dans lesquels R₁, R₂, R₃ et R₄ représentent avantageusement des groupes alkyles de C₁ à C₄.

L'ester d'acide azocarboxylique particulièrement préféré est le diéthyl 2,2'-azobisisobutyrate, c'est-à-dire avec R₁, R₂, R₃ et R₄ représentant le méthyle et R' et R" représentant l'éthyle. Un mélange de diéthyl 2,2'- azobisisobutyrate (DEAB) et de diméthyl 2,2'-azobisisobutyrate (DMAB) avec un taux massique en DEAB, de préférence supérieur à 50 % est également préféré. Des mélanges de DEAB, DMAB et de méthyl 2, éthyl 2'- azobisisobutyrate avec de préférence un rapport molaire COOMe/COOEt ≤ 10 peuvent convenir.

Le polymère thermoplastique est avantageusement choisi parmi le polystyrène et le polychlorure de vinyle seuls ou en mélange avec d'autres polymères. Un cas particulièrement intéressant est celui des mousses obtenues à partir du PVC contenant également du polyuréthane formé à partir de di-isocyanates inclus dans la formulation à faire expanser.

L'étape de pré-mélange du ou des polymère(s) thermoplastique(s) avec au moins un ester d'acide azocarboxylique de formule (I) peut être mise en oeuvre en présence d'autres ingrédients tels que plastifiants, stabilisants thermiques, colorants, agents réticulants, et des monomères capables de polymériser et/ou de réticuler pendant l'expansion comme les di ou les poly isocyanates.

L'étape de pré-mélange peut être effectuée dans des conditions contrôlées de température. La température du pré-mélange est de préférence comprise entre 10 et 30 °C.

La quantité d'ester d'acide azocarboxylique mise en jeu est de préférence comprise entre 2 et 15 % en poids par rapport au polymère présent dans l'étape de pré-mélange.

Après l'étape de pré-mélange, le procédé peut comprendre une étape de mise en moule (plaques) suivie d'une étape de pré-expansion, suivie, à son tour, d'une étape d'expansion finale et mûrissement.

L'ester d'acide azocarboxylique de formule (I) préféré est celui qui, à la température de préparation du pré-mélange, se trouve à l'état liquide.

Selon un mode de réalisation de l'invention, après l'étape de pré-mélange du polymère thermoplastique à l'état de solide divisé (poudre, agglomérats, écailles, granulés, etc.) avec au moins un ester d'acide azocarboxylique de formule (I) dans des conditions contrôlées de température, le mélange ainsi formé, auquel ont pu être ajoutés également d'autres ingrédients comme ceux cités ci-dessus, est placé dans des moules ou des récipients, comme par exemple ceux ayant la forme de plaques rectangulaires, et il est soumis à une étape de pré-expansion dans des conditions contrôlées de température et de pression permettant le ramollissement du polymère thermoplastique et un début de décomposition de l'agent d'expansion azoïque de manière à créer des *nuclei* ou des germes, à partir desquels se développera ultérieurement l'expansion finale. Le mélange pré-expansé est ensuite refroidi et détendu ce qui permet l'obtention d'objets, par exemple des plaques, rigides qui sont ensuite soumis à l'étape d'expansion finale et mûrissement en les plaçant à des conditions contrôlées de température et d'humidité, mais à pression atmosphérique, pendant le temps nécessaire à l'obtention d'objets (plaques) à solides de forme désirée qui présentent une multiplicité de cellules substantiellement fermées.

Selon un autre mode de réalisation de l'invention, après l'étape de pré-mélange du polymère thermoplastique à l'état de solide divisé (poudre, agglomérats, écailles, granulés, etc.) avec au moins un ester d'acide azocarboxylique de formule (I) dans des conditions contrôlées de température, le mélange ainsi formé, auquel ont pu être ajoutés également d'autres ingrédients comme ceux cités ci-dessus, est extrudé à travers une filière dans des conditions de pression et de température telles que pendant le passage dans l'extrudeuse le mélange ne puisse pas s'expanser complètement et de manière à ce que l'essentiel de l'expansion se produise à la sortie de l'extrudeuse, immédiatement ou après un temps donné d'expansion finale et de mûrissement du mélange extrudé dans des conditions de température et d'humidité contrôlées.

Le procédé selon la présente invention permet d'obtenir des mousses expansées avec une dispersion homogène des cellules, une bonne résistance mécanique et aussi de bonnes performances isolantes. Les mousses ainsi fabriquées sont aptes à être utilisées dans des applications d'isolation, structurales, par exemple pales d'éoliennes, coques de bateaux, de confort, par exemple panneaux des wagons de trains.

## Revendications

1. Procédé de fabrication de mousses thermoplastiques **caractérisé en ce qu'**il comprend une étape de pré-mélange d'au moins un polymère thermoplastique se présentant sous la forme d'un solide divisé avec au moins un ester d'acide azocarboxylique de formule (I) 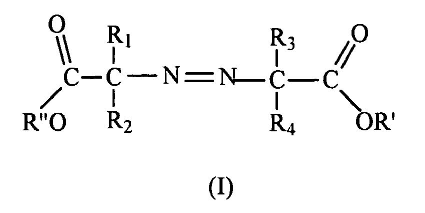 dans laquelle R₁, R₂, R₃ et R₄ identiques ou différents sont sélectionnés indépendamment dans le groupe consistant en
- alkyles linéaires ou ramifiés ayant de 1 à 9 atomes de carbone, de préférence de 1 à 4 atomes de carbone, éventuellement substitués par un ou plusieurs substituants sélectionnés parmi les substituants hydroxyl, alkoxy en C₁ à C₆ halogène ;
- cycloalkyles en C₃ à C₁₂, éventuellement substitués par un ou plusieurs substituants sélectionnés parmi les groupes alkyle en C₁ à C₆, alkoxy en C₁ à C₆ hydroxy et halogéné ;
- aralkyles éventuellement substitués par un ou plusieurs groupes alkyle en C₁ à C₆, alkoxy en C₁ à C₆ hydroxy et halogéné ;
- aryles éventuellement substitués par un ou plusieurs substituants sélectionnés parmi les groupes alkyle en C₁ à C₆, alkoxy en C₁ à C₆ hydroxy et halogéné ;
avec au moins une des combinaisons R₁-R₂ et R₃-R₄ pouvant éventuellement former un cycle aliphatique ; R" et R' sont identiques ou différents l'un de l'autre et sont sélectionnés indépendamment dans le groupe consistant en radicaux aliphatiques linéaires ou ramifiés en C₁ à C₁₀, de préférence en C₁ à C₄.

2. Procédé selon la revendication 1 **caractérisé en ce que** l'ester d'acide azocarboxylique est choisi parmi les esters d'acides carboxyliques de formule (I) dans laquelle R" et R' représentent le méthyle ou l'éthyle et R₁, R₂, R₃ et R₄ représentent avantageusement des groupes alkyles de C₁ à C₄.

3. Procédé selon la revendication 1 ou 2 **caractérisé en ce que** l'ester d'acide azocarboxylique est le diéthyl 2,2'-azobisisobutyrate, éventuellement en mélange avec le diméthyl 2,2'-azobisisobutyrate.

4. Procédé selon l'une quelconque des revendications 1 à 3 **caractérisé en ce que** le polymère thermoplastique est choisi parmi le polystyrène et polychlorure de vinyle.

5. Procédé selon l'une quelconque des revendications 1 à 4 **caractérisé en ce qu'**il comprend une étape de pré-expansion après l'étape de pré-mélange.

6. Procédé selon la revendication 5 **caractérisé en ce qu'**il comprend une étape d'expansion après l'étape de pré-expansion.

## Claims

1. Process for the manufacture of thermoplastic foams, **characterized in that** it comprises a stage of preblending at least one thermoplastic polymer provided in the form of a divided solid with at least one azocarboxylic acid ester of formula (I) 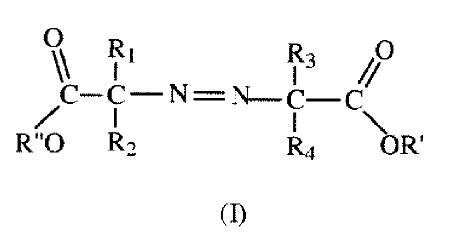 in which R₁, R₂, R₃ and R₄, which are identical or different, are independently selected from the group consisting of:
- linear or branched alkyls having from 1 to 9 carbon atoms, preferably from 1 to 4 carbon atoms, optionally substituted by one or more substituents selected from hydroxyl, C₁ to C₆ alkoxy or halogen substituents;
- C₃ to C₁₂ cycloalkyls, optionally substituted by one or more substituents selected from C₁ to C₆ alkyl, C₁ to C₆ alkoxy, hydroxyl and halogen groups;
- aralkyls, optionally substituted by one or more C₁ to C₆ alkyl, C₁ to C₆ alkoxy, hydroxyl and halogen groups;
- aryls, optionally substituted by one or more substituents selected from C₁ to C₆ alkyl, C₁ to C₆ alkoxy, hydroxyl and halogen groups;
with at least one of the R₁-R₂ and R₃-R₄ combinations optionally being able to form an aliphatic ring; R" and R' are identical to or different from one another and are independently selected from the group consisting of linear or branched C₁ to C₁₀, preferably C₁ to C₄, aliphatic radicals.

2. Process according to Claim 1, **characterized in that** the azocarboxylic acid ester is chosen from azocarboxylic acid esters of formula (I) in which R" and R' represent methyl or ethyl and R₁, R₂, R₃ and R₄ advantageously represent C₁ to C₄ alkyl groups.

3. Process according to Claim 1 or 2, **characterized in that** the azocarboxylic acid ester is diethyl 2,2'-azobisisobutyrate, optionally as a mixture with dimethyl 2,2'-azobisisobutyrate.

4. Process according to any one of Claims 1 to 3, **characterized in that** the thermoplastic polymer is chosen from polystyrene and polyvinyl chloride.

5. Process according to any one of Claims 1 to 4, **characterized in that** it comprises a preexpansion stage after the preblending stage.

6. Process according to Claim 5, **characterized in that** it comprises an expansion stage after the preexpansion stage.

## Patentansprüche

1. Verfahren zur Herstellung von thermoplastischen Schaumstoffen, **dadurch gekennzeichnet, dass** es einen Schritt des Vormischens von mindestens einem thermoplastischen Polymer, das in Form eines geteilten Feststoffs vorliegt, mit mindestens einem Azocarbonsäureester der Formel (I) 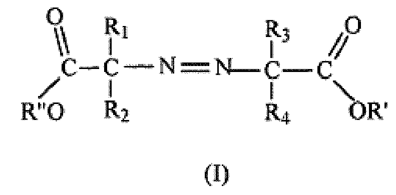 worin R₁, R₂, R₃ und R₄ gleich oder verschieden sind und unabhängig voneinander aus der Gruppe bestehend aus
- linearen oder verzweigten Alkylgruppen mit 1 bis 9 Kohlenstoffatomen, vorzugsweise 1 bis 4 Kohlenstoffatomen, die gegebenenfalls durch einen oder mehrere unter Hydroxyl-, C₁- bis C₆-Alkoxy- und Halogensubstituenten ausgewählte Substituenten substituiert sind;
- C₃- bis C₁₂-Cycloalkylgruppen, die gegebenenfalls durch einen oder mehrere unter C₁- bis C₆-Alkyl-, C₁- bis C₆-Alkoxy- und Halogengruppen ausgewählte Substituenten substituiert sind;
- Aralkylgruppen, die gegebenenfalls durch einen oder mehrere unter C₁- bis C₆-Alkyl-, C₁- bis C₆-Alkoxy-, Hydroxy- und Halogengruppen ausgewählte Substituenten substituiert sind;
- Arylgruppen, die gegebenenfalls durch einen oder mehrere unter C₁- bis C₆-Alkyl-, C₁- bis C₆-Alkoxy-, Hydroxy- und Halogengruppen ausgewählte Substituenten substituiert sind;
ausgewählt sind, wobei mindestens eine der Kombinationen R₁-R₂ und R₃-R₄ gegebenenfalls einen cycloaliphatischen Ring bilden können; R" und R' gleich oder voneinander verschieden sind und unabhängig voneinander aus der Gruppe bestehend aus linearen oder verzweigten aliphatischen C₁- bis C₁₀- und vorzugsweise C₁- bis C₄-Resten ausgewählt sind;
umfasst.

2. Verfahren nach Anspruch 1, **dadurch gekennzeichnet, dass** man den Azocarbonsäureester unter den Azocarbonsäureestern der Formel (I), worin R" und R' für Methyl oder Ethyl stehen und R₁, R₂, R₃ und R₄ vorteilhafterweise für C₁- bis C₄-Alkylgruppen stehen, auswählt.

3. Verfahren nach Anspruch 1 oder 2, **dadurch gekennzeichnet, dass** es sich bei dem Azocarbonsäureester um 2,2'-Azobisisobuttersäurediethylester, gegebenenfalls im Gemisch mit 2,2'-Azobisisobuttersäuredimethylester, handelt.

4. Verfahren nach einem der Ansprüche 1 bis 3, **dadurch gekennzeichnet, dass** man das thermoplastische Polymer unter Polystyrol und Polyvinylchlorid auswählt.

5. Verfahren nach einem der Ansprüche 1 bis 4, **dadurch gekennzeichnet, dass** es einen Vorexpansionsschritt nach dem Vormischschritt umfasst.

6. Verfahren nach Anspruch 5, **dadurch gekennzeichnet, dass** es einen Expansionsschritt nach dem Vorexpansionsschritt umfasst.
